(19) **Europäisches Patentamt / European Patent Office / Office européen des brevets**

(11) **EP 1 497 930 B1**

(12) **EUROPÄISCHE PATENTSCHRIFT**

(45) Veröffentlichungstag und Bekanntmachung des Hinweises auf die Patenterteilung:
**07.05.2008   Patentblatt 2008/19**

(21) Anmeldenummer: **03718642.6**

(22) Anmeldetag: **28.03.2003**

(51) Int Cl.:
*H04B 7/06* (2006.01)

(86) Internationale Anmeldenummer:
**PCT/DE2003/001036**

(87) Internationale Veröffentlichungsnummer:
**WO 2003/090377 (30.10.2003 Gazette 2003/44)**

(54) **VORRICHTUNG ZUR BERECHNUNG VON FSM-BITS IM UMTS-STANDARD**

DEVICE FOR CALCULATING FSM BITS IN UMTS STANDARD

DISPOSITIF DE CALCUL DE BITS FSM DANS UN STANDARD UMTS

(84) Benannte Vertragsstaaten:
**DE FR GB**

(30) Priorität: **22.04.2002   DE 10217853**

(43) Veröffentlichungstag der Anmeldung:
**19.01.2005   Patentblatt 2005/03**

(73) Patentinhaber: **Infineon Technologies AG**
**81669 München (DE)**

(72) Erfinder:
• **BECKER, Burkhard**
**85737 Ismaning (DE)**
• **DREWES, Christian**
**80538 München (DE)**

• **NIEDERHOLZ, Jürgen**
**47647 Kerken (DE)**
• **ZIMMERMANN, Manfred**
**81539 München (DE)**

(74) Vertreter: **Graf Lambsdorff, Matthias et al**
**Patentanwälte**
**Lambsdorff & Lange**
**Dingolfinger Strasse 6**
**81673 München (DE)**

(56) Entgegenhaltungen:
| | |
|---|---|
| EP-A- 1 143 636 | EP-A- 1 146 660 |
| EP-A- 1 175 022 | WO-A- 02/32017 |

EP 1 497 930 B1

**Beschreibung**

Die Erfindung betrifft eine Vorrichtung, mit welcher sich FSM-Bits berechnen lassen, die insbesondere im UMTS-Standard die Antennengewichte einer Basisstation bestimmen.

Bei einem Mobilfunksystem, welches eine Basisstation mit zwei Antennen und einen Mobilfunkteilnehmer umfasst, stellt sich zwischen den beiden Übertragungskanälen, die jeweils einer der Antennen der Basisstation zuzuordnen sind, eine feste Phasenbeziehung ein. Im UMTS (Universal Mobile Telecommunications System)-Standard kann mittels einer sogenannten CLTD (Closed Loop Mode Transmit Diversity)-Funktion die Beziehung der von den beiden Antennen abgestrahlten Signale beeinflusst werden, um dadurch eine konstruktive Interferenz der beiden Übertragungskanäle zu erzielen. Die CLTD-Funktion kann in einem Modus 1 und in einem Modus 2 betrieben werden. Im Modus 1 lässt sich die Phase einer der beiden Antennen variieren. Die Phase der anderen Antenne bleibt fest. Insgesamt wird dadurch die Phasenbeziehung zwischen beiden Antennen variiert. Der Modus 2 sieht neben der aus dem Modus 1 bekannten Variation der Phasenbeziehung eine Variation der Amplituden der von den Antennen abgestrahlten Signale vor. Im Modus 2 sind die Amplituden beider Antennen veränderbar.

Die CLTD-Funktion ist in der UMTS-Spezifikation 3GPP TS 25.214 beschrieben. Im Folgenden wird auf diese Spezifikation wiederholt Bezug genommen werden. Alle Angaben beziehen sich dabei auf die Version V4.2.0 (2001-09).

Mittels der CLTD-Funktion werden in dem Mobilfunkendgerät aus geschätzten Kanalimpulsantworten FSM (Feedback Signalling Message)-Datenwörter gebildet, welche an die Basisstation übermittelt werden. Dabei werden für ein FSM-Datenwort stets die Kanalimpulsantworten beider Kanäle herangezogen. Die FSM-Datenwörter enthalten für die Basisstation bestimmte Informationen über die optimale Phasenbeziehung und gegebenenfalls über die optimalen Amplituden der von den beiden Antennen auszusendenden Signale.

In der Basisstation werden aus einem FSM-Datenwort zwei Antennengewichte $w_1$ und $w_2$ gebildet, mit welchen die Signale, die von den zwei Antennen abgestrahlt werden sollen, beaufschlagt werden. Die Antennengewichte $w_1$ und $w_2$ sind komplexwertig und weisen folgende Form auf:

$$w_1 = \alpha_1 + j\beta_1 \tag{1}$$

$$w_2 = \alpha_2 + j\beta_2 \tag{2}$$

Durch die Multiplikation der auszusendenden Signale mit den Antennengewichten $w_1$ und $w_2$ findet eine Bewertung der beiden Diversitätskomponenten statt. Die Wahl der Antennengewichte $w_1$ und $w_2$ hat dabei zum Ziel, unter Berücksichtigung der im UMTS-Standard vorgegebenen Gewichtsquantisierung die von dem Mobilfunkendgerät empfangene Energie pro Slot zu maximieren. Dies ist gleichbedeutend mit der Maximierung eines Proportionalitätsfaktors P, welcher durch folgende Gleichung gegeben ist:

$$P = \vec{w}^H \begin{bmatrix} H_{11} & H_{12} \\ H_{21} & H_{22} \end{bmatrix} \vec{w} = \vec{w}^H \left( \sum_{m=1}^{M} H_m^H H_m \right) \vec{w} \tag{3}$$

Hierbei bezeichnet der Index m die jeweilige Basisstation m (m = 1,..., M). Ferner gelten für die Matrix $H_m$ und den Vektor $\vec{w}$:

$$H_m = \left[ \vec{h}_{m,1}, \vec{h}_{m,2} \right] \tag{4}$$

$$\bar{w} = [w_1, w_2]^T \tag{5}$$

Die Indizes 1 und 2 beziehen sich auf die beiden Antennen i einer Basisstation m. $\vec{h}_{m,i}$ sind komplexwertige $(N_m \times 1)$ - Vektoren, welche für die von dem Kanalschätzer mit einer Kanaltiefe $N_m$ geschätzten Kanalimpulsantworten stehen. Jeder Vektor $\vec{h}_{m,i}$ ist mit einer der Antennen i der Basisstation m zu assoziieren. Ohne Beschränkung der Allgemeinheit soll für die nachfolgenden Betrachtungen angenommen werden, dass nur eine Basisstation m sendet (M = 1). Daher wird der Index m im Folgenden weggelassen, sodass sich Gleichung (4) vereinfacht:

$$H = [\bar{h}_1, \bar{h}_2] \tag{6}$$

Für die Elemente $H_{ij}$ der Matrix aus Gleichung (3) gilt mit i, j = 1, 2:

$$H_{ij} = \bar{h}_i^H \vec{h}_j = |H_{ij}| e^{j\varphi_{H_{ij}}}, \tag{7}$$

wobei $|H_{ij}|$ einen Betrag und $\varphi_{H_{ij}}$ einen Phasenwinkel angeben.

Demnach beinhaltet das zu lösende technische Problem eine derartige Bestimmung der Antennengewichte $w_1$ und $w_2$ pro Slot, dass der Proportionalitätsfaktor P für gegebene geschätzte Kanalimpulsantworten $\vec{h}_i = [h_{i,1}, \ldots , h_{i,n}, \ldots, h_{i,N}]^T$ maximiert wird. Dabei sind Randbedingungen für die Wertebereiche der Antennengewichte $w_1$ und $w_2$ zu beachten.

Im Modus 1 der CLTD-Funktion gelten für die Antennengewichte $w_1$ und $w_2$ folgende Randbedingungen:

$$w_1 = \frac{1}{\sqrt{2}} \tag{8}$$

$$w_2 = \frac{1}{\sqrt{2}} e^{j\varphi_2} \tag{9}$$

$$\varphi_2 \in \left\{ 0, \frac{\pi}{2}, \pi, -\frac{\pi}{2} \right\} \tag{10}$$

Dabei ist der Phasenwinkel $\varphi_2$ (s) eine Funktion des Slotindex s (s = 1, 2,..., S). Nähere Erläuterungen dazu finden sich im Abschnitt 7.2 der UMTS-Spezifikation 3GPP TS 25.214 V4.2.0.

Im Modus 2 der CLTD-Funktion gelten für die Antennengewichte $w_1$ und $w_2$ folgende Randbedingungen:

$$w_1 = \sqrt{E_1} \tag{11}$$

$$w_2 = \sqrt{E_2}\, e^{j\varphi_2} \qquad\qquad (12)$$

$$E_1, E_2 \in \{0.2, 0.8\} \qquad\qquad (13)$$

$$E_1 + E_2 = 1 \qquad\qquad (14)$$

$$\varphi_2 \in \left\{ 0, \frac{\pi}{4}, \frac{\pi}{2}, \frac{3\pi}{4}, \pi, -\frac{\pi}{4}, -\frac{\pi}{2}, -\frac{3\pi}{4} \right\} \qquad\qquad (15)$$

Dabei sind die Amplituden $E_1(s)$ und $E_2(s)$ sowie der Phasenwinkel $\varphi_2(s)$ Funktionen des Slotindex s (s = 1, 2,..., S). Der Modus 2 ist im Abschnitt 7.3 der UMTS-Spezifikation 3GPP TS 25.214 V4.2.0 näher beschrieben.

Die Bestimmung der optimalen Werte für den Phasenwinkel $\varphi_2(s)$ und gegebenenfalls für die Amplituden $E_1(s)$ und $E_2(s)$ in Abhängigkeit vom Modus und Slotindex s wurde bisher durch Parametrisierung von Gleichung (3) oder durch das Einsetzen der infragekommenden Werte gelöst. Im Modus 1 muss dabei pro Slot eine Auswahl aus lediglich zwei Phasenwinkelwerten getroffen werden. Im Modus 2 müssen demgegenüber 16 Kombinationen von Amplitude und Phasenwinkel bewerten werden. Aufgrund der Struktur des Berechnungsalgorithmus wurde dieses Problem bisher mittels eines Digitalsignalprozessors gelöst. Dabei generiert der Digitalsignalprozessor ausgangsseitig ein aus FSM-Bits bestehendes FSM-Datenwort, in welchem Informationen über die optimalen Werte für den Phasenwinkel $\varphi_2(s)$ und gegebenenfalls für die Amplituden $E_1(s)$ und $E_2(s)$ enthalten sind.

Aufgabe der Erfindung ist es, eine Vorrichtung zu schaffen, mit welcher FSM-Bits in Abhängigkeit vom Modus und Slotindex besonders effizient bestimmt werden können. Ferner soll ein entsprechendes Verfahren zur Berechnung der FSM-Bits angegeben werden.

Die der Erfindung zugrunde liegende Aufgabenstellung wird durch die Merkmale der unabhängigen Patentansprüche 1 und 13 gelöst. Vorteilhafte Weiterbildungen und Ausgestaltungen der Erfindung sind in den Unteransprüchen angegeben.

Die erfindungsgemäße Vorrichtung dient zur Berechnung von FSM-Bits, durch welche die von zwei Antennen einer Basisstation gesendeten Signale in Bezug auf ihre Phasendifferenz und/oder ihre Amplituden beeinflusst sind. Die FSM-Bits werden anhand von zwei geschätzten Kanalimpulsantworten berechnet. Dabei bezieht sich jeweils eine Kanalimpulsantwort auf den zu einer der Antennen gehörigen Kanal. Ein wesentlicher Gedanke der Erfindung liegt darin, dass die Vorrichtung festverdrahtet ist. Sie liegt also als Hardware-Schaltung vor.

Durch den Hardwareaufbau der erfindungsgemäßen Vorrichtung kann diese die benötigten Berechnungen wesentlich effizienter durchführen als ein Digitalsignalprozessor. Ferner ist die erfindungsgemäße Vorrichtung aufwandsgünstiger als ein Digitalsignalprozessor.

Die Vorrichtung bildet aus Komponenten der zwei Kanalimpulsantworten einen komplexen Zeiger, um anschließend durch Rotation und Projektion des Zeigers und insbesondere durch eine Schwellwertentscheidung ein FSM-Bit zu generieren. Insbesondere können die Kanalkoeffizienten, welche für jeden Kanal in einer Kanalimpulsantwort zusammengefasst sind, komplexwertig sein. Dann kann auch der Real- bzw. Imaginärteil eines Kanalkoeffizienten eine Komponente einer Kanalimpulsantwort bilden.

Die Vorrichtung weist vorteilhafterweise Eingänge, Steuereingänge und einen Ausgang auf. Die Eingänge werden mit Komponenten der zwei Kanalimpulsantworten beaufschlagt, und die Steuereingänge werden mit Steuersignalen beaufschlagt. Dies ermöglicht es der Vorrichtung, in Abhängigkeit von den Komponenten der zwei Kanalimpulsantworten und den Steuersignalen das FSM-Bit zu berechnen. Das FSM-Bit ist an dem Ausgang der Vorrichtung abgreifbar.

Eine bevorzugte Ausgestaltung der Erfindung sieht vor, dass die Vorrichtung eine Logikeinheit und eine Verarbeitungseinheit, welche der Logikeinheit nachgeschaltet ist, enthält.

Vorzugsweise weist die Logikeinheit eine gleiche Anzahl von Eingängen und Ausgängen auf. An den Eingängen der Logikeinheit liegen die Komponenten der zwei Kanalimpulsantworten an. Die Eingänge der Logikeinheit werden mit den Ausgängen der Logikeinheit in Abhängigkeit von mindestens einem Steuersignal verbunden.

Gemäß einer weiteren bevorzugten Ausgestaltung der Erfindung sind in der Verarbeitungseinheit eine Multiplizierstufe, ein Addierer, eine Gewichtungsstufe, ein Akkumulator und ein Schwellwertentscheider hintereinander angeordnet.

Dabei kann vorzugsweise vorgesehen sein, dass die Multiplizierstufe zwei Multiplizierer enthält, die jeweils zwei von der Logikeinheit gelieferte Werte miteinander multipliziert. Dazu sind die Eingänge der Multiplizierer jeweils mit zwei Ausgängen der Logikeinheit verbunden. Die Multiplikationsergebnisse der beiden Multiplizierer werden von dem Addierer addiert.

Die Gewichtungsstufe multipliziert vorteilhafterweise die von dem Addierer gebildete Summe mit einem Gewichtungsfaktor. Der Gewichtungsfaktor ergibt sich aus einem Steuersignal, welches an der Gewichtungsstufe anliegt.

Eine besonders bevorzugte Ausgestaltung der Erfindung ist dadurch gekennzeichnet, dass die Steuersignale in einem Festwertspeicher in Form von Steuerbits abgelegt sind. Diese Maßnahme ermöglicht eine im Vergleich zu einem Digitalsignalprozessor höhere Berechnungsgeschwindigkeit der FSM-Bits.

Des Weiteren ist die erfindungsgemäße Vorrichtung besonders bevorzugt für den UMTS-Standard ausgelegt.

Bei einer nach dem UMTS-Standard arbeitenden Vorrichtung sind die Steuersignale vorzugsweise sowohl von der Slotnummer des FSM-Bits, dessen Berechnung zu diesem Zeitpunkt ansteht, als auch von dem CLTD-Modus abhängig. Durch diese Ausgestaltung ist die Vorrichtung flexibel genug ausgelegt, um verschiedenartige Berechnungen für sämtliche Kombinationen aus Slotnummer und CLTD-Modus durchführen zu können.

Gemäß einer bevorzugten Ausgestaltung der Erfindung sind die Werte der Steuersignale davon abhängig, ob die Slotnummer eine gerade oder ungerade Zahl ist.

Die erfindungsgemäße Vorrichtung lässt sich besonders vorteilhaft in dem zugehörigen Mobilfunkendgerät implementieren.

Mittels des erfindungsgemäßen Verfahrens werden FSM-Bits anhand von zwei geschätzten Kanalimpulsantworten berechnet. In einem ersten Verfahrensschritt wird aus Komponenten der zwei Kanalimpulsantworten ein komplexer Zeiger erzeugt. Aus diesem Zeiger wird in einem zweiten Verfahrensschritt durch Rotation, Projektion und insbesondere eine Schwellwertentscheidung ein FSM-Bit errechnet. Das erfindungsgemäße Verfahren zeichnet sich durch eine besonders effiziente und schnelle Berechnung des FSM-Bits aus.

Nachfolgend wird die Erfindung beispielhaft unter Bezugnahme auf die Zeichnungen näher erläutert. In diesen zeigen:

Fig. 1    ein schematisches Schaltbild eines Ausführungsbeispiels der erfindungsgemäßen Vorrichtung;

Fig. 2    eine anschauliche Darstellung der Arbeitsweise der erfindungsgemäßen Vorrichtung in der komplexen Zahlenebene für den Modus 1; und

Fig. 3    eine anschauliche Darstellung der Arbeitsweise der erfindungsgemäßen Vorrichtung in der komplexen Zahlenebene für den Modus 2.

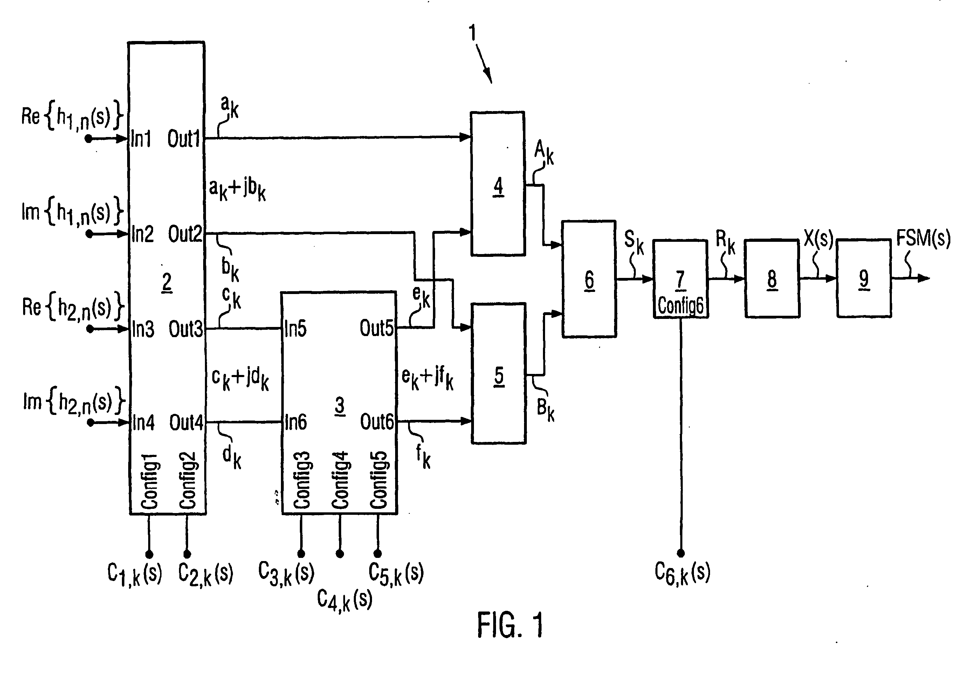

In Fig. 1 ist eine Schaltung 1 als Ausführungsbeispiel für die erfindungsgemäße Vorrichtung dargestellt. Die Schaltung 1 umfasst Logikeinheiten 2 und 3, Multiplizierer 4 und 5, einen Addierer 6, eine Gewichtungseinheit 7, einen Akkumulator 8 und einen Schwellwertentscheider 9.

Die Logikeinheit 2 weist Eingänge In1, In2, In3 und In4, Konfigurationseingänge Config1 und Config2 sowie Ausgänge Out1, Out2, Out3 und Out4 auf. Die Eingänge In1, In2, In3 und In4 der Logikeinheit 2 sind gleichzeitig Eingänge der Schaltung 1. Die Logikeinheit 3 weist Eingänge In5 und In6, Konfigurationseingänge Config3, Config4 und Config5 sowie Ausgänge Out5 und Out6 auf. Die Multiplizierer 4 und 5 sowie der Addierer 6 weisen jeweils zwei Eingänge und einen Ausgang auf. Die Gewichtungseinheit 7, der Akkumulator 8 und der Schwellwertentscheider 9 umfassen jeweils einen Ein- und einen Ausgang. Ferner enthält die Gewichtungseinheit 7 einen Konfigurationseingang Config6. Der Ausgang des Schwellwertentscheiders 9 stellt den Ausgang der Schaltung 1 dar.

Der Ausgang Out3 der Logikeinheit 2 ist mit dem Eingang In5 der Logikeinheit 3 verbunden. Der Ausgang Out4 der Logikeinheit 2 ist mit dem Eingang In6 der Logikeinheit 3 verbunden.

Ein Eingang des Multiplizierers 4 ist an den Ausgang Out1 der Logikeinheit 2 gekoppelt. Der zweite Eingang des Multiplizierers 4 ist an den Ausgang Out5 der Logikeinheit 3 gekoppelt.

Ein Eingang des Multiplizierers 5 ist an den Ausgang Out2 der Logikeinheit 2 gekoppelt. Der zweite Eingang des Multiplizierers 5 ist an den Ausgang Out6 der Logikeinheit 3 gekoppelt.

Die Ausgänge der Multiplizierer 4 und 5 speisen die Eingänge des Addierers 6. Dem Addierer 6 sind die Gewichtungseinheit 7, der Akkumulator 8 und der Schwellwertentscheider 9 in der angegebenen Reihenfolge nachgeschaltet.

Die Schaltung 1 ist vorliegend in ein gemäß dem UMTS-Standard arbeitendes Mobilfunkendgerät integriert und dient zur Generierung von FSM-Bits. Die FSM-Bits werden anschließend an die zugehörige Basisstation übertragen, in welcher aus den FSM-Bits Antennengewichte erzeugt werden.

Die Basisstation weist zwei Antennen auf. Folglich werden von einem Kanalschätzer für zwei Kanäle i komplexwertige Kanalkoeffizienten $h_{i,n}$ mit einer Kanaltiefe N berechnet (i = 1, 2; n = 1, 2,..., N). Die Kanalkoeffizienten $h_{i,n}$ sind für jeden Kanal i in einem N-komponentigen Vektor als Kanalimpulsantwort $\vec{h_i} = [h_{i,1}, .... h_{i,n}, ..., h_{i,N}]^T$ zusammengefasst. An den Eingängen In1, In2, In3 und In4 der Schaltung 1 liegen während der Dauer eines Slot s jeweils die Real- bzw. Imaginärteile der Kanalkoeffizienten $h_{1,n}$ und $h_{2,n}$ an. An den Konfigurationseingängen Config1, Config2,..., Config6 liegen die Konfigurationsbits $C_{1,k}(s)$, $C_{2,k}(s)$, ... , $C_{6,k}(s)$ an. Gemäß der UMTS-Spezifikation 3GPP TS 25.214 V4.2.0 läuft der Slotindex s von 1 bis 15. Der Taktindex k durchläuft die ganzzahligen Werte von 1 bis 2N. Der Pfadindex n steht im Verhältnis 1:2 zum Taktindex k. Das bedeutet, dass ein Kanalkoeffizient $h_{i,n}$ zwei Systemtakte zur Verarbeitung an der Schaltung 1 anliegt.

Die Arbeitsweise der Schaltung 1 ist wie folgt. Die Logikeinheiten 2 und 3 verbinden in Abhängigkeit von den Konfigurationsbits $C_{1,k}(s)$ ,..., $C_{5,k}(s)$ ihre Eingänge In1, ... , In6 mit ihren Ausgängen Out1,..., Out6. Dadurch ergeben sich an den Ausgängen Out1 und Out2 eine komplexe Zahl $a_k+jb_k$, an den Ausgängen Out3 und Out4 eine komplexe Zahl $c_k+jd_k$ und an den Ausgängen Out5 und Out6 eine komplexe Zahl $e_k+jf_k$. Die Multiplizierer 4 bzw. 5 erzeugen ausgangsseitig reelle Zahlen $A_k$ bzw. $B_k$, der Addierer 6 eine reelle Zahl $S_k$ und die Gewichtungseinheit 7 in Abhängigkeit von dem Konfigurationsbit $C_{6,k}(s)$ eine reelle Zahl $R_k$. Der Akkumulator 8 akkumuliert über die zweimalige Kanaltiefe 2N und erzeugt ausgangsseitig eine Größe X(s). Der Schwellwertentscheider 9 generiert aus der Größe X(s) ein FSM-Bit FSM(s) anhand von folgender Fallunterscheidung:

$$X(s) < 0 \implies FSM(s) = 0$$
$$X(s) \geq 0 \implies FSM(s) = 1$$

$$(16)$$

Die genaue Funktionsweise der Schaltung 1 ist durch die nachfolgende Tabelle 1 gegeben:

| Nr. | $a_k+jb_k$ | $c_k+jd_k$ | $C_{1,k}(s)$, $C_{2,k}(s)$ |
|---|---|---|---|
| 1. | k gerade: $Re\{h_{1,n}(s)\}+jIm\{h_{1,n}(s)\}$ <br> k ungerade: 0 | k gerade: $Re\{h_{2,n}(s)\}+jIm\{h_{2,n}(s)\}$ <br> k ungerade: 0 | 1, 1 <br> X |
| 2. | k gerade: $Re\{h_{1,n}(s)\}+jIm\{h_{1,n}(s)\}$ <br> k ungerade: 0 | k gerade: $Re\{h_{2,n}(s)\}+jIm\{h_{2,n}(s)\}$ <br> k ungerade: 0 | 1, 1 <br> X |
| 3. | $Re\{h_{1,n}(s)\}+jIm\{h_{1,n}(s)\}$ | $Re\{h_{2,n}(s)\}+jIm\{h_{2,n}(s)\}$ | 1, 1 |
| 4. | $Re\{h_{1,n}(s)\}+jIm\{h_{1,n}(s)\}$ | $Re\{h_{2,n}(s)\}+jIm\{h_{2,n}(s)\}$ | 1, 1 |
| 5. | $Re\{h_{1,n}(s)\}+jIm\{h_{1,n}(s)\}$ | $Re\{h_{2,n}(s)\}+jIm\{h_{2,n}(s)\}$ | 1, 1 |
| 6. | $Re\{h_{1,n}(s)\}+jIm\{h_{1,n}(s)\}$ | $Re\{h_{2,n}(s)\}+jIm\{h_{2,n}(s)\}$ | 1, 1 |
| 7. | $Re\{h_{1,n}(s)\}+jIm\{h_{1,n}(s)\}$ | $Re\{h_{2,n}(s)\}+jIm\{h_{2,n}(s)\}$ | 1, 1 |
| 8. | $Re\{h_{1,n}(s)\}+jIm\{h_{1,n}(s)\}$ | $Re\{h_{2,n}(s)\}+jIm\{h_{2,n}(s)\}$ | 1, 1 |
| 9. | k gerade: $Re\{h_{1,n}(s)\}+jIm\{h_{1,n}(s)\}$ <br> k ungerade: $Re\{h_{2,n}(s)\}+jIm\{h_{2,n}(s)\}$ | k gerade: $Re\{h_{1,n}(s)\}+jIm\{h_{1,n}(s)\}$ <br> k ungerade: $Re\{h_{2,n}(s)\}+jIm\{h_{2,n}(s)\}$ | 1, 0 <br> 0, 1 |

| Nr. | $e_k+jf_k$ | $C_{3,k}(s)$, $C_{4,k}(s)$, $C_{5,k}(s)$ | $A_k$ | $B_k$ | $S_k$ |
|---|---|---|---|---|---|
| 1. | k gerade: $c_k+jd_k$ <br> k ungerade: 0 | 1, 1, 1 <br> X | $a_k e_k$ | $b_k f_k$ | $A_k+B_k$ |
| 2. | k gerade: $-d_k+jc_k$ <br> k ungerade: 0 | 0, 0, 1 <br> X | $a_k e_k$ | $b_k f_k$ | $A_k+B_k$ |
| 3. | k gerade: $c_k+jd_k$ <br> k ungerade: $-d_k+jc_k$ | 1, 1, 1 <br> 0, 0, 1 | $a_k e_k$ | $b_k f_k$ | $A_k+B_k$ |
| 4. | k gerade: $c_k+jd_k$ <br> k ungerade: $d_k-jc_k$ | 1, 1, 1 <br> 1, 1, 0 | $a_k e_k$ | $b_k f_k$ | $A_k+B_k$ |
| 5. | k gerade: $-c_k-jd_k$ <br> k ungerade: $-d_k+jc_k$ | 1, 0, 0 <br> 0, 0, 1 | $a_k e_k$ | $b_k f_k$ | $A_k+B_k$ |
| 6. | k gerade: $c_k+jd_k$ <br> k ungerade: $-d_k+jc_k$ | 1, 1, 1 <br> 0, 0, 1 | $a_k e_k$ | $b_k f_k$ | $A_k+B_k$ |
| 7. | k gerade: $c_k+jd_k$ <br> k ungerade: $d_k-jc_k$ | 1, 1, 1 <br> 0, 1, 0 | $a_k e_k$ | $b_k f_k$ | $A_k+B_k$ |
| 8. | k gerade: $-c_k-jd_k$ <br> k ungerade: $d_k-jc_k$ | 1, 0, 0 <br> 0, 1, 0 | $a_k e_k$ | $b_k f_k$ | $A_k+B_k$ |
| 9. | k gerade: $c_k+jd_k$ <br> k ungerade: $-c_k-jd_k$ | 1, 1, 1 <br> 1, 0, 0 | $a_k e_k$ | $b_k f_k$ | $A_k+B_k$ |

| Nr. | $R_k$ | $C_{6,k}(s)$ | $X(s)$ |
|---|---|---|---|
| 1. | k gerade: $1 \cdot S_k$ | 1 | $Re\{H_{21}(s)\}$ |
|  | k ungerade: 0 | X |  |
| 2. | k gerade: $1 \cdot S_k$ | 1 | $Im\{H_{21}(s)\}$ |
|  | k ungerade: 0 | X |  |
| 3. | k gerade: $\tan(\pi/8) \cdot S_k$ | 0 | $Im\{H_{21}(s) \cdot exp(j\pi/8)/\cos(\pi/8)\}$ |
|  | k ungerade: $1 \cdot S_k$ | 1 |  |
| 4. | k gerade: $1 \cdot S_k$ | 1 | $Re\{H_{21}(s) \cdot exp(j\pi/8)/\cos(\pi/8)\}$ |
|  | k ungerade: $\tan(\pi/8) \cdot S_k$ | 0 |  |
| 5. | k gerade: $\tan(\pi/8) \cdot S_k$ | 0 | $Im\{H_{21}(s) \cdot exp(-j\pi/8)/\cos(\pi/8)\}$ |
|  | k ungerade: $1 \cdot S_k$ | 1 |  |
| 6. | k gerade: $1 \cdot S_k$ | 1 | $Re\{H_{21}(s) \cdot exp(-j\pi/8)/\cos(\pi/8)\}$ |
|  | k ungerade: $\tan(\pi/8) \cdot S_k$ | 0 |  |
| 7. | k gerade: $\tan(\pi/8) \cdot S_k$ | 0 | $-Im\{H_{21}(s) \cdot exp(-j\pi/8)/\cos(\pi/8)\}$ |
|  | k ungerade: $1 \cdot S_k$ | 1 |  |
| 8. | k gerade: $1 \cdot S_k$ | 1 | $-Re\{H_{21}(s) \cdot exp(-j\pi/8)/\cos(\pi/8)\}$ |
|  | k ungerade: $\tan(\pi/8) \cdot S_k$ | 0 |  |
| 9. | k gerade: $1 \cdot S_k$ | 1 | $\lvert H_{11}(s)\rvert^2 \cdot \lvert H_{22}(s)\rvert^2$ |
|  | k ungerade: $1 \cdot S_k$ | 1 |  |

Die drei untereinander aufgeführten Blöcke von Tabelle 1 sind so zu verstehen, dass jede Zeile eines Blocks ihre Fortsetzung in der entsprechenden Zeile des nachfolgenden Blocks findet.

Aus Tabelle 1 lassen sich die Vorgaben, welche die Konfigurationsbits $C_{1,k}(s)$, $C_{2,k}(s)$, ..., $C_{6,k}(s)$ machen, ablesen.

Für $C_{1,k}(s) = 1$ und $C_{2,k}(s) = 1$ werden die Eingänge In1,..., In4 der Logikeinheit 2 mit den ihnen in Fig. 1 jeweils gegenüber liegenden Ausgängen Out1,..., Out4 verbunden. Für $C_{1,k}(s) = 0$ werden die Eingänge In1 bzw. In2 auf die Ausgänge Out3 bzw. Out4 gelegt. Für $C_{2,k}(s) = 0$ werden die Eingänge In3 bzw. In4 auf die Ausgänge Out1 bzw. Out2 gelegt.

Das Konfigurationsbit $C_{3,k}(s)$ entscheidet über die Zuordnung der Ausgänge Out5 und Out6 der Logikeinheit 3 zu den Eingängen In5 und In6. Für $C_{3,k}(s) = 1$ werden der Eingang In5 auf den Ausgang Out5 und der Eingang In6 auf den Ausgang Out6 gelegt. Für $C_{3,k}(s) = 0$ werden der Eingang In5 auf den Ausgang Out6 und der Eingang In6 auf den Ausgang Out5 gelegt.

Die Konfigurationsbits $C_{4,k}(s)$ bzw. $C_{5,k}(s)$ bestimmen die Vorzeichen der Ausgänge Out5 bzw. Out6. Für $C_{4,k}(s) = 1$ bzw. $C_{5,k}(s) = 1$ weisen die Ausgänge Out5 bzw. Out6 ein positives Vorzeichen auf, für $C_{4,k}(s) = 0$ bzw. $C_{5,k}(s) = 0$ sind die Vorzeichen der Ausgänge Out5 bzw. Out6 negativ.

Das Konfigurationsbit $C_{6,k}(s)$ entscheidet über die Gewichtung, mit welcher die Zahl $S_k$ in der Gewichtungseinheit 7 beaufschlagt wird. Für $C_{6,k}(s) = 1$ bleibt die Zahl $S_k$ unverändert, für $C_{6,k}(s) = 0$ wird die Zahl $S_k$ mit dem Faktor $\tan(\pi/8)$ multipliziert.

Ein Wert "X" in der Tabelle 1 für eines der Konfigurationsbits $C_{1,k}(s)$,..., $C_{6,k}(s)$ bedeutet, dass der Block nicht getaktet wird und somit keinen neuen Ausgang erzeugt.

Um Tabelle 1 anwenden zu können, muss noch eine Vorgabe über die zu betrachtende Zeile von Tabelle 1 gemacht werden. Eine solche Zeilenangabe liefert die nachfolgend aufgeführte Tabelle 2, welche eine Beziehung zwischen der Kombination aus CLTD-Modus und Slotindex s mit den Zeilennummern von Tabelle 1 herstellt.

| CLTD-Modus/Slot-Kombination | Nr. aus Tabelle 1 |
|---|---|
| Modus 1<br>s gerade | 1 |
| Modus 1<br>s ungerade | 2 |
| Modus 2<br>s modulo 4 = 0 | 3 |
| Modus 2<br>s modulo 4 = 1 | 4 |
| Modus 2<br><br>s modulo 4 = 2 | 5 oder 6 oder 7 oder 8 |
| Modus 2<br>s modulo 4 = 3 | 9 |

Im Modus 2 und bei s modulo 4 = 2 wird zwischen den Zeilennummern 5, 6, 7 oder 8 von Tabelle 1 in Abhängigkeit von den Ergebnissen von FSM(s-1) und FSM(s-2) ausgewählt. Die entsprechenden Zuordnungen können an den Einträgen der nachfolgend aufgeführten Tabelle 3 abgelesen werden.

| FSM(s-2) | FSM(s-1) | Nr. aus Tabelle 1 |
|---|---|---|
| 0 | 0 | 7 |
| 0 | 1 | 8 |
| 1 | 0 | 6 |
| 1 | 1 | 5 |

Es ist zu beachten, dass gemäß der UMTS-Spezifikation 3GPP TS 25.214 V4.2.0 ein FSM-Datenwort im Modus 1 aus einem FSM-Bit FSM(s) und im Modus 2 aus vier FSM-Bits FSM(s) besteht. Daher werden im Modus 1 mit fortlaufendem Slotindex s alternierend die Zeilen Nr. 1 und 2 aus Tabelle 1 für die Konfigurierung von Schaltung 1 verwendet. Im Modus 2 werden die Zeilen Nr. 3, 4, 5 bis 8 und 9 aufgrund der vier FSM-Bits FSM(s) des FSM-Datenworts mit einer Periodizität von 4 bezüglich des Slotindex s angewählt.

Die Einträge in den Tabellen 1 und 2 werden vorzugsweise in einem Festwertspeicher abgelegt und müssen somit nicht während der Verarbeitung berechnet werden.

Im Folgenden werden die Zusammenhänge erläutert, die den Einträgen in den Tabellen 1 und 2 zugrunde liegen.

Die Berechnung eines FSM-Bits FSM(s) kann für sämtliche CLTD-Modus/Slot-Kombinationen auf die ausschließliche Betrachtung von einem oder zwei Elementen $H_{ij}$ der Matrix aus Gleichung (3) zurückgeführt werden. Die Elemente $H_{ij}$ werden zur Berechnung eines FSM-Bits FSM(s) derselben Verarbeitung unterzogen. Diese Verarbeitung besteht im Wesentlichen aus Rotationen und Projektionen.

Für CLTD-Modus/Slot-Kombinationen, in denen das FSM-Bit FSM(s) eine Aussage über den Phasenwinkel

$\varphi_2$ macht, wird das Matrixelement $H_{21} = |H_{21}| e^{j\varphi_{H21}}$ betrachtet. Die Ableitung von Gleichung (3) nach dem

Phasenwinkel $\varphi_2$ führt für beide CLTD-Modi und für $\varphi_2 = \varphi_{H21}$ zum Maximalwert des Proportionalitätsfaktors P.

Für CLTD-Modus/Slot-Kombinationen, in denen das FSM-Bit FSM(s) eine Aussage über die Beträge der Antennengewichte $w_1$ und $w_2$ macht, werden die Matrixelemente $H_{11}$ und $H_{22}$ betrachtet. Unter Berücksichtigung der Vorgaben der UMTS-Spezifikation 3GPP TS 25.214 V4.2.0, nach welchen die Amplituden $E_1(s)$ und $E_2(s)$ nur zwei Werte annehmen können, muss hierbei lediglich die Differenz $|H_{11}|^2 - |H_{22}|^2$ bewertet werden.

Die spezifischen Verarbeitungen für verschiedene CLTD-Modus/Slot-Kombinationen unterscheiden sich insbesondere in der Drehung des durch das Matrixelement $H_{21}$ gegebenen komplexen Zeigers in der komplexen Zahlenebene und dessen Projektion auf die reelle oder die imaginäre Achse. Die jeweilige Verarbeitung wird mittels der Konfigurationsbits $C_{1,k}(s), ..., C_{6,k}(s)$ gesteuert. In Tabelle 1 sind die möglichen 9 Verarbeitungsfälle der Schaltung 1 aufgelistet.

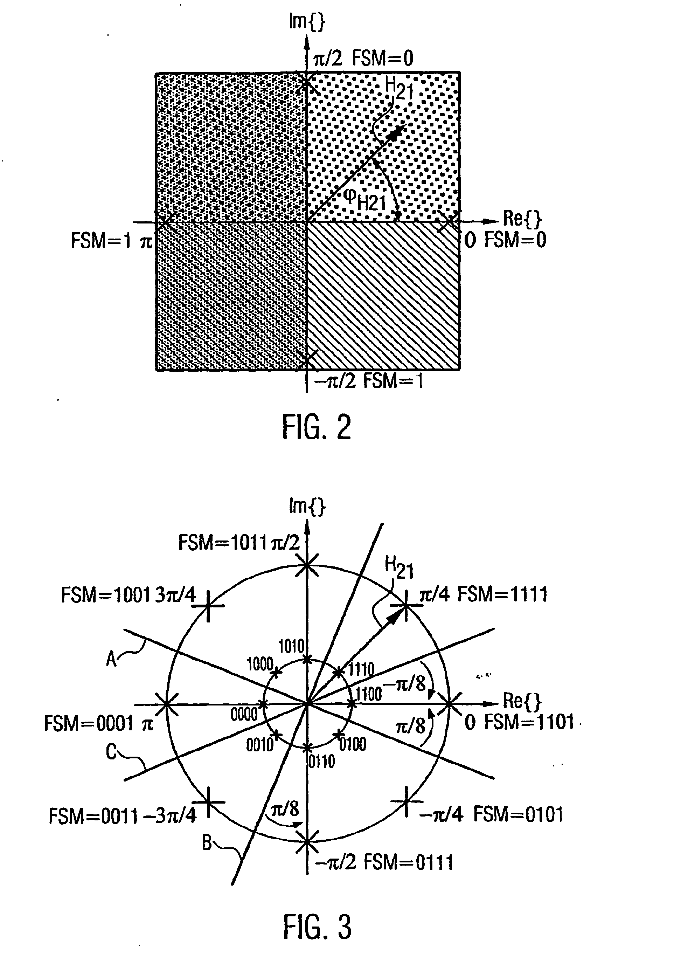

In Fig. 2 sind die Konstellationen in der komplexen Zahlenebene dargestellt, welche im Modus 1 bewertet werden müssen.

Während des normalen Betriebs der CLTD-Funktion im Modus 1, d.h. außerhalb einer Initialisierung oder eines sogenannten "compressed mode", muss nach Abschnitt 7.2 der UMTS-Spezifikation 3GPP TS 25.214 V4.2.0 für einen geradzahligen Slotindex s bewertet werden, ob der komplexe Zeiger $H_{21}$ in Fig. 2 in der hellen komplexen Halbebene, d.h. im 1. oder 4. Quadranten, oder in der dunklen komplexen Halbebene, d.h. im 2. oder 3. Quadranten, liegt. Für einen ungeradzahligen Slotindex s muss bewertet werden, ob der komplexe Zeiger $H_{21}$ in der gepunkteten komplexen Halbebene, d.h. im 1. oder 2. Quadranten, oder in der gestrichenen komplexen Halbebene, d.h. im 3. oder 4. Quadranten, liegt. Bei fortlaufendem Slotindex s werden beide Aufgaben mit dem alternierenden Verwenden der Zeilen Nr. 1 und 2 aus Tabelle 1 abgearbeitet.

In Fig. 3 sind die Konstellationen in der komplexen Zahlenebene dargestellt, welche im Modus 2 bewertet werden müssen.

Auch hier soll die Schaltung 1 im normalen Betriebsmodus der CLTD-Funktion im Modus 2 betrieben werden, d.h. außerhalb eines sogenannten "end of frame adjustment", einer Initialisierung oder eines "compressed mode". Nachfolgend wird beschrieben, wie die vier FSM-Bits FSM(s) des FSM-Datenworts für einen in der komplexen Zahlenebene im Winkelsegment zwischen $\pi/8$ und $3\pi/8$ liegenden Zeiger $H_{21}$ mit $|H_{11}| > |H_{22}|$ gewonnen werden. Dieser Zeiger $H_{21}$ ist in Fig. 3 eingezeichnet.

Für s = 0 ist im Modus 2 nach Tabelle 2 die Zeile Nr. 3 aus Tabelle 1 anzuwenden. Gemäß Zeile Nr. 3 aus Tabelle 1 muss untersucht werden, ob der die Größe X(s) angebende Term $\text{Im}\{H_{21}(s)\cdot e^{j\pi/8}/\cos(\pi/8)\}$ positiv oder negativ ist. Anschaulich gibt dieser Term an, dass der Zeiger $H_{21}$ aufgrund der Multiplikation mit dem Faktor $e^{j\pi/8}$ in der komplexen Zahlenebene um den Winkel $\pi/8$ gegen den Uhrzeigersinn gedreht wird, um den Faktor $1/\cos(\pi/8)$ gestreckt wird und anschließend auf die imaginäre Achse projiziert wird. Diese Projektion wird daraufhin untersucht, ob sie auf der positiven oder der negativen Halbgeraden der imaginären Achse liegt. In der komplexen Zahlenebene können die beschriebenen Operationen durch eine Schwellwertentscheidung ersetzt werden. Dazu muss untersucht werden, ob der Zeiger $H_{21}$ oberhalb oder unterhalb der in Fig. 3 eingezeichneten Geraden A liegt. Die Gerade A ist gegenüber der reellen Achse um den Winkel $\pi/8$ im Uhrzeigersinn verdreht und kompensiert somit die Drehung des Zeigers $H_{21}$ um den Winkel $\pi/8$ gegen den Uhrzeigersinn. Vorliegend liegt der Zeiger $H_{21}$ oberhalb der Geraden A, sodass das FSM-Bit FSM(0) den Wert 1 erhält.

In der Schaltung 1 wird die Drehung um die Winkel $\pi/8$ oder $-\pi/8$ durch die Verwendung der Gewichte 1 und $\tan(\pi/8)$ in der Gewichtungseinheit 7 berücksichtigt. Dabei wird der Zeiger $H_{21}$ um den Faktor $1/\cos(\pi/8)$ gestreckt, was jedoch für die Aussage bezüglich des Winkels unerheblich ist.

Für s = 1 wird im Modus 2 nach Tabelle 2 die Zeile Nr. 4 aus Tabelle 1 dazu herangezogen, um das FSM-Bit FSM(1) zu berechnen. Folglich muss hier der Term $\text{Re}\{H_{21}(s)\cdot e^{j\pi/8}/\cos(\pi/8)\}$ betrachtet werden. In entsprechender Weise zu dem Vorgehen im Fall von s = 0 muss hierbei untersucht werden, auf welcher Seite der in Fig. 3 eingezeichneten Geraden B der Zeiger $H_{21}$ liegt. Die Gerade B ergibt sich durch eine Drehung der reellen Achse um einen Winkel von $\pi/8$ im Uhrzeigersinn. Vorliegend ergibt sich für das FSM-Bit FSM(1) ein Wert von 1.

Für s = 2 muss nach Zeile Nr. 5 aus Tabelle 1 eine Bewertung bezüglich der in Fig. 3 eingezeichneten Geraden C stattfinden. Die Gerade C ist gegenüber der imaginären Achse um den Winkel $\pi/8$ gegen den Uhrzeigersinn verdreht. Es ergibt sich für das FSM-Bit FSM(2) ein Wert von 1.

Für s = 3 wird die Zeile Nr. 9 aus Tabelle 1 verwendet. Dies führt zu einem Wert von 1 für das FSM-Bit FSM(3). Insgesamt lautet das sich aus dem Zeiger $H_{21}$ ergebende FSM-Datenwort 1111.

In Fig. 3 sind beispielhaft verschiedene mögliche Positionen des Zeigers $H_{21}$ durch Kreuze gekennzeichnet. Daneben sind die diesen Positionen zugehörigen FSM-Datenwörter vermerkt.

**Patentansprüche**

**1.** Vorrichtung (1) zur Berechnung von FSM-Bits (FSM(s)), durch welche die von zwei Antennen einer Basisstation gesendeten Signale in Bezug auf ihre Phasendifferenz und/oder ihre Amplituden beeinflusst sind, anhand von zwei geschätzten Kanalimpulsantworten ($h_{1,n}(s)$, $h_{2,n}(s)$), wobei

    - die Vorrichtung (1) festverdrahtet vorliegt,
    - aus Komponenten ($h_{1,n}(s)$, $h_{2,n}(s)$) der zwei Kanalimpulsantworten ein komplexer Zeiger ($H_{21}$) gebildet wird, und
    - ein FSM-Bit (FSM(s)) durch Rotation und Projektion des Zeigers ($H_{21}$) erzeugt wird.

**2.** Vorrichtung (1) nach Anspruch 1,

**dadurch gekennzeichnet,**

- **dass** an Eingängen (In1,..., In4) der Vorrichtung (1) Komponenten ($h_{1,n}$(s), $h_{2,n}$(s)) der zwei Kanalimpulsantworten anlegbar sind,
- **dass** an Steuereingängen (Config1, ...,Config6) der Vorrichtung (1) Steuersignale ($C_{1,k}$(s) ,..., $C_{6,k}$(s)) anlegbar sind, und
- **dass** an einem Ausgang der Vorrichtung (1) das FSM-Bit (FSM(s)) abgreifbar ist, wobei das FSM-Bit (FSM(s)) in Abhängigkeit von den Komponenten ($h_{1,n}$(s), $h_{2,n}$(s)) der zwei Kanalimpulsantworten und den Steuersignalen ($C_{1,k}$(s) , ... , $C_{6,k}$(s)) berechnet wird.

3. Vorrichtung (1) nach Anspruch 2,
**gekennzeichnet durch**

- eine Logikeinheit (2, 3) und eine der Logikeinheit (2, 3) nachgeschaltete Verarbeitungseinheit (4,..., 9).

4. Vorrichtung (1) nach Anspruch 3,
**dadurch gekennzeichnet,**

- **dass** Komponenten ($h_{1,n}$(s), $h_{2,n}$(s) der zwei Kanalimpulsantworten an Eingängen (In1, In2, In3, In4) der Logikeinheit (2, 3) anliegen,
- **dass** die Logikeinheit (2, 3) Ausgänge (Out1, Out2, Out 5, Out6) aufweist, deren Anzahl gleich der Anzahl ihrer Eingänge (In1, In2, In3, In4) ist, und
- **dass** die Eingänge (In1, In2, In3, In4) der Logikeinheit (2, 3) mit den Ausgängen (Out1, Out2, Out 5, Out6) der Logikeinheit (2, 3) in Abhängigkeit von mindestens einem der Steuersignale ($C_{1,k}$(s), ..., $C_{s,k}$(s)) verbindbar sind.

5. Vorrichtung (1) nach Anspruch 3 oder 4,
**dadurch gekennzeichnet,**

- **dass** in der Verarbeitungseinheit (4,..., 9) eine Multiplizierstufe (4, 5), ein Addierer (6), eine Gewichtungsstufe (7), ein Akkumulator (8) und ein Schwellwertentscheider (9) in der angegebenen Reihenfolge hintereinander geschaltet sind.

6. Vorrichtung (1) nach Anspruch 5,
**dadurch gekennzeichnet,**

- **dass** die Multiplizierstufe zwei Multiplizierer (4, 5) aufweist, deren Eingänge jeweils mit zwei Ausgängen (Out1, Out2, Out 5, Out6) der Logikeinheit (2, 3) verbunden sind, und
- **dass** die Eingänge des Addierers (6) mit den Ausgängen der Multiplizierer (4, 5) verbunden sind.

7. Vorrichtung (1) nach Anspruch 5 und 6,
**dadurch gekennzeichnet,**

- **dass** an der Gewichtungsstufe (7) ein Steuersignal ($C_{6,k}$(s)) anliegt, und
- **dass** die Gewichtungsstufe (7) die von dem Addierer (6) gebildete Summe ($S_k$) mit einem Gewichtungsfaktor in Abhängigkeit von dem an ihr anliegenden Steuersignal ($C_{6,k}$(s)) beaufschlagt.

8. Vorrichtung (1) nach einem oder mehreren der Ansprüche 2 bis 7,
**dadurch gekennzeichnet,**

- **dass** die Steuersignale in Form von Steuerbits ($C_{1,k}$(s),..., $C_{6,k}$(s)) in einem Festwertspeicher abgelegt sind.

9. Vorrichtung (1) nach einem oder mehreren der vorhergehenden Ansprüche,
**dadurch gekennzeichnet,**

- **dass** die Vorrichtung (1) für den UMTS-Standard ausgelegt ist.

10. Vorrichtung (1) nach Anspruch 9,

**dadurch gekennzeichnet,**

- **dass** die Steuersignale ($C_{1,k}(s)$ , ... , $C_{6,k}(s)$) von der Slotnummer (s) des zu berechnenden FSM-Bits (FSM (s)) und von dem CLTD-Modus abhängig sind.

11. Vorrichtung (1) nach Anspruch 9 oder 10,
**dadurch gekennzeichnet,**

- **dass** die Steuersignale ($C_{1,k}(s)$,..., $C_{6,k}(s)$) davon abhängig sind, ob die Slotnummer (s) des zu berechnenden FSM-Bits (FSM(s)) eine gerade oder ungerade Zahl ist.

12. Vorrichtung (1) nach einem oder mehreren der vorhergehenden Ansprüche,
**dadurch gekennzeichnet,**

- **dass** das FSM-Bit (FSM(s)) ferner durch eine Schwellwertentscheidung erzeugt wird.

13. Mobilfunkendgerät mit einer Vorrichtung (1) nach einem oder mehreren der vorhergehenden Ansprüche.

14. Verfahren zur Berechnung von FSM-Bits (FSM(s)), durch welche die von zwei Antennen einer Basisstation gesendeten Signale in Bezug auf ihre Phasendifferenz und/oder ihre Amplituden beeinflusst werden, anhand von zwei geschätzten Kanalimpulsantworten ($h_{1,n}(s)$, $h_{2,n}(s)$), mit den Schritten:

(a) Erzeugen eines komplexen Zeigers ($H_{21}$) aus Komponenten ($h_{1,n}(s)$, $h_{2,n}(s)$) der zwei Kanalimpulsantworten; und
(b) Berechnen eines FSM-Bits (FSM(s)) durch Rotation und Projektion des Zeigers ($H_{21}$).

15. Verfahren nach Anspruch 14,
**dadurch gekennzeichnet,**

- **dass** die Rotation und Projektion des Zeigers ($H_{21}$) durch Steuersignale ($C_{1,k}(s)$,..., $C_{6,k}(s)$) bestimmt ist.

16. Verfahren nach Anspruch 14 oder 15,
**dadurch gekennzeichnet,**

- **dass** zur Berechnung des FSM-Bits (FSM(s)) nach der Rotation und Projektion des Zeigers ($H_{21}$) eine Schwellwertentscheidung durchgeführt wird.

17. Verfahren nach einem oder mehreren der Ansprüche 14 bis 16,
**dadurch gekennzeichnet,**

- **dass** das Verfahren für den UMTS-Standard ausgelegt ist.

18. Verfahren nach Anspruch 15 und 17,
**dadurch gekennzeichnet,**

- **dass** die Steuersignale ($C_{1,k}(s)$,..., $C_{6,k}(s)$) von der Slotnummer (s) des zu berechnenden FSM-Bits (FSM(s)) und von dem CLTD-Modus abhängig sind.

19. Verfahren nach Anspruch 18,
**dadurch gekennzeichnet,**

- **dass** die Steuersignale ($C_{1,k}(s)$, ..., $C_{6,k}(s)$) davon abhängig sind, ob die Slotnummer (s) des zu berechnenden FSM-Bits (FSM(s)) eine gerade oder ungerade Zahl ist.

**Claims**

1. Device (1) for calculating FSM bits (FSM(s)) by means of which the signals sent from two antennas of a base station are influenced with reference to their phase difference and/or their amplitudes with the aid of two estimated channel impulse responses ($h_{1,n}(s)$, $h_{2,n}(s)$),

- the device (1) being present in hard-wired form,
- a complex phasor ($H_{21}$) being formed from components ($h_{1,n}(s)$, $h_{2,n}(s)$) of the two channel impulse responses, and
- an FSM bit (FSM(s)) being produced by means of rotation and projection of the phasor ($H_{21}$).

**2.** Device (1) according to Claim 1, **characterized**

- **in that** components ($h_{1,n}(s)$, $h_{2,n}(s)$) of the two channel impulse responses can be applied at inputs (In1, ..., In4) of the device (1),
- **in that** control signals ($C_{1,k}(s)$, ..., $C_{6,k}(s)$) can be applied at control inputs (Config1, ..., Config6) of the device (1), and
- **in that** the FSM bit (FSM(s)) can be tapped at an output of the device (1), the FSM bit (FSM(s)) being calculated as a function of the components ($h_{1,n}(s)$, $h_{2,n}(s)$) of the two channel impulse responses and the control signals ($C_{1,k}(s)$, ... , $C_{6,k}(s)$).

**3.** Device (1) according to Claim 2, **characterized by**

- by a logic unit (2, 3) and a processing unit (4, ..., 9) connected downstream of the logic unit (2, 3).

**4.** Device (1) according to Claim 3, **characterized**

- **in that** components ($h_{1,n}(s)$, $h_{2,n}(s)$) of the two channel impulse responses are present at inputs (In1, In2, In3, In4) of the logic unit (2, 3),
- **in that** the logic unit (2, 3) has outputs (Out1, Out2, Out5, Out6) whose number is equal to the number of its inputs (In1, In2, In3, In4), and
- **in that** the inputs (In1, In2, In3, In4) of the logic unit (2, 3) can be connected to the outputs (Out1, Out2, Out5, Out6) of the logic unit (2, 3) as a function of at least one of the control signals ($C_{1,k}(s)$, ..., $C_{5,k}(s)$).

**5.** Device (1) according to Claim 3 or 4, **characterized**

- **in that** a multiplier stage (4, 5), an adder (6), a weighting stage (7), an accumulator (8) and a threshold value value decision unit (9) are connected in series in the prescribed sequence in the processing unit (4, ..., 9).

**6.** Device (1) according to Claim 5, **characterized**

- **in that** the multiplier stage has two multipliers (4, 5) whose inputs are connected in each case to two outputs (Out1, Out2, Out5, Out6) of the logic unit (2, 3), and
- **in that** the inputs of the adder (6) are connected to the outputs of the multipliers (4, 5).

**7.** Device (1) according to Claims 5 and 6, **characterized**

- **in that** a control signal ($C_{6,k}(s)$) is present at the weighting stage (7), and
- **in that** the weighting stage (7) applies a weighting factor to the sum ($S_k$) formed by the adder (6), doing so as a function of the control signal ($C_{6,k}(s)$) present at it.

**8.** Device (1) according to one or more of Claims 2 to 7, **characterized**

- **in that** the control signals are stored in the form of control bits ($C_{1,k}(s)$, ..., $C_{6,k}(s)$) in a read-only memory.

**9.** Device (1) according to one or more of the preceding claims, **characterized**

- **in that** the device (1) is designed for the UMTS standard.

**10.** Device (1) according to Claim 9, **characterized**

- **in that** the control signals ($C_{1,k}(s)$, ..., $C_{6,k}(s)$) are a function of the slot number (s) of the FSM bit (FSM(s)) to be calculated, and of the CLTD mode.

**11.** Device (1) according to Claim 9 or 10, **characterized**

- **in that** the control signals ($C_{1,k}(s)$,..., $C_{6,k}(s)$) are a function of whether the slot number (s) of the FSM bit (FSM(s)) to be calculated is an even or odd number.

**12.** Device (1) according to one or more of the preceding claims **characterized**

- **in that** the FSM bit (FSM(s)) is further produced by means of a threshold value decision.

**13.** Mobile radio terminal having a device (1) according to one or more of the preceding claims.

**14.** Method for calculating FSM bits (FSM(s)) by means of which the signals sent from two antennas of a base station are influenced with reference to their phase difference and/or their amplitudes with the aid of two estimated channel impulse responses ($h_{1,n}(s)$, $h_{2,n}(s)$), having the following steps:

(a) producing a complex phasor ($H_{21}$) from components ($h_{1,n}(s)$, $h_{2,n}(s)$) of the two channel impulse responses; and
(b) calculating an FSM bit (FSM(s)) by rotation and projection of the phasor ($H_{21}$).

**15.** Method according to Claim 14, **characterized**

- **in that** the rotation and projection of the phasor ($H_{21}$) is determined by control signals ($C_{1,k}(s)$, ..., $C_{6,k}(s)$).

**16.** Method according to Claim 14 or 15, **characterized**

- **in that** a threshold value value decision is carried out after the rotation and projection of the phasor ($H_{21}$) in order to calculate the FSM bit (FSM(s)).

**17.** Method according to one or more of Claims 14 to 16, **characterized**

- **in that** the method is designed for the UMTS standard.

**18.** Method according to Claims 15 and 17, **characterized**

- **in that** the control signals ($C_{1,k}(s)$, ..., $C_{6,k}(s)$) are a function of the slot number (s) of the FSM bit (FSM(s)) to be calculated, and of the CLTD mode.

**19.** Method according to Claim 18, **characterized**

- **in that** the control signals ($C_{1,k}(s)$, ..., $C_{6,k}(s)$) are a function of whether the slot number (s) of the FSM bit (FSM(s)) to be calculated is an even or odd number.

**Revendications**

**1.** Dispositif (1) permettant de calculer des bits FSM (FSM(s)) au moyen desquels on influe sur les signaux, émis par deux antennes d'une station de base, quant à leur différence de phase et/ou leurs amplitudes au moyen de deux réponses impulsionnelles de canal estimées ($h_{1,n}(s)$, $h_{2,n}(s)$),

- le dispositif (1) se présentant sous forme câblé à demeure,
- un vecteur complexe ($H_{21}$) étant formé à partir de composantes ($h_{1,n}(s)$, $h_{2,n}(s)$) des deux réponses impulsionnelles de canal, et
- un bit FSM (FSM(s)) étant généré par rotation et projection du vecteur ($H_{21}$).

**2.** Dispositif (1) selon la revendication 1, **caractérisée en ce que**

- des composantes ($h_{1,n}$(s), $h_{2,n}$(s)) des deux réponses impulsionnelles de canal peuvent être appliquées aux entrées (In1, ..., In4) du dispositif (1)
- des signaux de commande ($C_{1,k}$(s), ..., $C_{6,k}$(s)) peuvent être appliqués aux entrées de commande (Config1, ..., Config6) du dispositif (1), et
- le bit FSM (FSM(s) peut être pris sur une sortie du dispositif (1), le bit FSM (FSM(s) étant calculé en fonction des composantes ($h_{1,n}$(s), $h_{2,n}$(s)) des deux réponses impulsionnelles de canal et des signaux de commande ($C_{1,k}$(s), ..., $C_{6,k}$(s)).

3. Dispositif (1) selon la revendication 2, **caractérisé par**

   - une unité de logique (2, 3) et une unité de traitement (4, ..., 9) montée en aval de l'unité de logique (2, 3).

4. Dispositif selon la revendication 3, **caractérisé en ce que**

   - des composantes ($h_{1,n}$(s), $h_{2,n}$(s)) des deux réponses impulsionnelles de canal sont appliquées aux entrées (In1, In2, In3, In4) de l'unité logique (2, 3),
   - l'unité logique (2, 3) comporte des sorties (Out1, Out2, Out5, Out6) dont le nombre est égal au nombre de leurs entrées (In1, In2, In3, In4), et
   - les entrées (In1, In2, In3, In4) de l'unité logique (2, 3) peuvent être reliées aux sorties (Out1, Out2, Out5, Out6) de l'unité logique (2, 3) en fonction d'au moins un des signaux de commande ($C_{1,k}$(s), ..., $C_{6,k}$(s)).

5. Dispositif (1) selon la revendication 3 ou 4, **caractérisé en ce que**

   - un étage multiplicateur (4, 5), un additionneur (6), un étage de pondération (7), un accumulateur (8) et un décideur à valeur de seuil (9) sont placés l'un derrière l'autre dans l'ordre indiqué dans l'unité de traitement (4, ..., 9).

6. Dispositif (1) selon la revendication 6, **caractérisé en ce que**

   - l'étage multiplicateur contient deux multiplicateurs (4, 5) qui multiplient dont les entrées sont chacune reliées à deux sorties (Out1, Out2, Out5, Out6) de l'unité logique (2, 3),
   - les entrées de l'additionneur (6) sont reliées aux sorties des multiplicateurs (4, 5).

7. Dispositif (1) selon la revendication 5 et 6, **caractérisé en ce que**

   - un signal de commande ($C_{6,k}$(s)) est appliqué à l'étage de pondération (7), et
   - l'étage de pondération (7) délivre la somme ($S_k$), formée par l'additionneur (6), avec un facteur de pondération en fonction du signal de commande ($C_{6,k}$(s)) qui lui est appliqué.

8. Dispositif (1) selon l'une ou plusieurs des revendications 2 à 7, **caractérisé en ce que**

   - les signaux de commande sont stockés sous la forme de bits de commande (($C_{1,k}$(s), ..., ($C_{6,k}$(s)) dans une mémoire ROM.

9. Dispositif (1) selon l'une ou plusieurs des revendications précédentes, **caractérisé en ce que**

   - le dispositif (1) est conçu pour la norme UMTS.

10. Dispositif (1) selon la revendication 9, **caractérisé en ce que**

    - les signaux de commande ($C_{1,k}$(s), ..., ($C_{6,k}$(s)) sont fonction du numéro de slot (s) du bit FSM (FSM(s)) à calculer et du mode CLTD.

11. Dispositif (1) selon la revendication 9 ou 10, **caractérisé en ce que**

    - les signaux de commande ($C_{1,k}$(s), ..., ($C_{6,k}$(s)) sont fonction de la parité, paire ou impaire, du numéro de slot (s) du bit FSM (FSM(s)) à calculer.

**12.** Dispositif (1) selon l'une ou plusieurs des revendications précédentes, **caractérisé en ce que** l'on génère le bit FSM (FSM(s)) en outre par une décision à valeur de seuil.

**13.** Terminal de téléphonie mobile comportant un dispositif (1) selon l'une ou plusieurs des revendications précédentes.

**14.** Procédé de calcul de bits FSM (FSM(s)) au moyen desquels on influe sur les signaux, émis par deux antennes d'une station de base, quant à leur différence de phase et/ou leurs amplitudes au moyen de deux réponses impulsionnelles de canal estimées ($h_{1,n}(s)$, $h_{2,n}(s)$), ledit procédé comprenant les étapes consistant à :

(a) générer un vecteur complexe ($H_{21}$) à partir des composantes ($h_{1,n}(s)$, $h_{2,n}(s)$) des deux réponses impulsionnelles de canal ; et
(b) calculer un bit FSM (FSM(s)) par rotation et projection du vecteur ($H_{21}$).

**15.** Procédé selon la revendication 14, **caractérisé en ce que**

- la rotation et la projection du vecteur ($H_{21}$) sont définies par des signaux de commande ($C_{1,k}(s)$, ..., ($C_{6,k}(s)$).

**16.** Procédé suivant la revendication 14 ou 15, **caractérisé en ce que** pour le calcul du bit FSM (FSM(s)) par la rotation et la projection du vecteur ($H_{21}$), on prend une décision à valeur de seuil.

**17.** Procédé selon l'une ou plusieurs des revendications 14 à 16, **caractérisé en ce que**

- le procédé est conçu pour la norme UMTS.

**18.** Procédé selon la revendication 15 et 17, **caractérisé en ce que**

- les signaux de commande ($C_{1,k}(s)$, ..., ($C_{6,k}(s)$) sont fonction du numéro de slot (s) du bit FSM (FSM(s)) à calculer et du mode CLTD.

**19.** Procédé selon la revendication 18, **caractérisé en ce que**

- les signaux de commande ($C_{1,k}(s)$, ..., ($C_{6,k}(s)$) sont fonction de la parité, paire ou impaire, du numéro de slot (s) du bit FSM (FSM(s)) à calculer.

FIG. 1

EP 1 497 930 B1

FIG. 2

FIG. 3